# EUROPÄISCHE PATENTANMELDUNG

(11) **EP 1 542 108 A1**
(43) Veröffentlichungstag der Anmeldung: **15.06.2005**
(21) Anmeldenummer: 03028711.4
(22) Anmeldetag: 12.12.2003
(51) Int. Cl.: G05B 23/02

(54) **Verfahren zur Überwachung einer technischen Einrichtung**

(71) Anmelder: SIEMENS AKTIENGESELLSCHAFT, 80333 München (DE)
(72) Erfinder: Bode, Andreas, 91315 Höchstadt (DE)

(57) **Zusammenfassung**

Bei einem erfindungsgemäßen Verfahren zur Überwachung einer technischen Einrichtung (1) wird während des Betriebs eine Anzahl an Betriebssignalen erfasst. Mittels der Betriebssignale wird ein Betriebssignalmittelwert (15) gebildet und daraus mindestens ein normiertes Betriebssignal (17,171) erzeugt. Dieses normierte Betriebssignal (17,171) wird schließlich mit einem Referenzwertebereich (35) des betreffenden Betriebssignals verglichen.

## Beschreibung

Die Erfindung betrifft ein Verfahren zur Überwachung einer technischen Einrichtung, welches insbesondere in einem Diagnosesystem auf Rechnerbasis implementierbar ist.

Überwachungsverfahren für technische Einrichtungen sind insbesondere in komplexen technischen Systemen unverzichtbar, um einen zuverlässigen und sicheren Betrieb zu gewährleisten. Bei den meisten bekannten technischen Systemen sind Sensoren vorgesehen, um Betriebssignale der vom System umfassten technischen Einrichtungen zu erfassen und entsprechend vorgegebener Kriterien auszuwerten. Dabei fallen in der Regel verschiedene Typen an Betriebssignalen an, beispielsweise Temperaturen, Drücke, Ströme oder Spannungen, welche darüber hinaus meist nicht nur bei einer technischen Einrichtung des technischen Systems auftreten, sondern bei mehreren. Des Weiteren können sich Typen eines Betriebssignals, beispielsweise gemessene Temperaturen, auf unterschiedliche Komponenten der technischen Einrichtung beziehen und sind daher mit jeweils unterschiedlichen, der jeweiligen Komponente angepassten Kriterien zu beurteilen.

Somit umfasst das Problem der Überwachung einer technischen Einrichtung oder gar eines komplexen technischen Systems eine Vielzahl an Aufgabenstellungen, insbesondere im Hinblick darauf, wie geeignete Kriterien aufzustellen sind, um die Messwerte der Betriebssignale richtig zu bewerten im Hinblick darauf, ob diese einen normalen, gewünschten Betrieb der technischen Einrichtung repräsentieren oder ob Handlungsbedarf besteht, den Betriebszustand der technischen Einrichtung zu verändern oder eine Reparatur vorzunehmen.

Im Stand der Technik sind Verfahren bekannt, bei welchen die Betriebssignale der technischen Einrichtung auf die Verletzung absoluter Grenzwerte überwacht werden. Diese absoluten Grenzwerte können beispielsweise eine Betriebsgrenze der technischen Einrichtung repräsentieren, außerhalb derer mit einer Zerstörung der technischen Einrichtung infolge einer Überbeanspruchung zu rechnen ist.

Nachteilig dabei ist, dass die Überwachung erst dann anspricht, wenn sich ein Betriebssignalwert bereits weit vom Normalbetrieb entfernt und einem absoluten Grenzwert angenähert hat. Üblicherweise sind jedoch die absoluten Grenzwerte sehr weit entfernt vom gewünschten normalen Betrieb der technischen Einrichtung, so dass dieses bekannte Überwachungsverfahren zwar eine Beschädigung der technischen Einrichtung verhindern kann, jedoch kleinere und dennoch unerwünschte Abweichungen von einem gewünschten Normalbetrieb nicht erkannt werden.

Des Weiteren sind Überwachungsverfahren mittels Diagnosesystemen bekannt, bei welchen aufwendige mathematische Verfahren implementiert sind, wie beispielsweise eine Regressionsanalyse oder neuronale Netze, um die aktuellen Werte der Betriebssignale zu analysieren und Rückschlüsse auf den aktuellen Status des Betriebszustands zu ziehen.

Dabei werden Erwartungswerte für die Betriebssignale mittels mathematischer Methoden ermittelt, welche dann mit den tatsächlich gemessenen Werten verglichen werden.

Nachteilig dabei ist vor allem der hohe Entwicklungsaufwand für derartige Verfahren sowie die mangelnde Übertragbarkeit auf andere technische Einrichtungen. Derartige bekannte Verfahren müssen sehr speziell und arbeitsintensiv auf die jeweils zu überwachende technische Einrichtung maßgeschneidert werden.

Der Erfindung liegt daher die Aufgabe zugrunde, ein einfaches Verfahren zur Überwachung einer technischen Einrichtung anzugeben, welches insbesondere die genannten Nachteile überwindet und eine ähnlich hohe Betriebssicherheit der technischen Einrichtung gewährleistet wie die bekannten aufwendigeren Verfahren.

Die Aufgabe wird erfindungsgemäß gelöst durch ein Verfahren zur Überwachung einer technischen Einrichtung mit folgenden Schritten:
1. Während des Betriebs der technischen Einrichtung wird eine Anzahl an Betriebssignalen der technischen Einrichtung erfasst.
2. Mittels mindestens eines Teils der Betriebssignale aus der Anzahl der Betriebssignale wird ein Betriebssignalmittelwert gebildet.
3. Für mindestens ein Betriebssignal wird ein normiertes Betriebssignal gebildet, welches eine Abweichung eines aktuellen Werts des Betriebssignals vom Betriebssignalmittelwert umfasst, und
4. das normierte Betriebssignal wird mit einem Referenzwertebereich des betreffenden Betriebssignals verglichen.

Die Erfindung geht dabei von der Überlegung aus, dass eine Normierung von zu überwachenden Betriebssignalen eine bessere Beurteilung des jeweiligen Betriebssignals erlaubt als eine Betrachtung des Absolutwerts des Betriebssignals. Ein normierter Wert für ein Betriebssignal beinhaltet mehr Information als der bloße Absolutwert dieses Betriebssignals. Beispielsweise bedeutet ein normierter Betriebssignalwert von 0 °C, dass die betrachtete Temperatur genauso hoch ist wie der Mittelwert aller überwachten Temperaturen bezüglich eines Überwachungsorts oder einer Komponente der technischen Einrichtung. Somit kann allein in Kenntnis des normierten Betriebssignalwerts bereits ein erster Schluss gezogen werden, dass sich der betrachtete Betriebssignalwert mit hoher Wahrscheinlichkeit in einem Normalbereich befindet.

Die bloße Betrachtung eines Absolutwerts gibt darüber gewöhnlich noch keinen Aufschluss.

Weiterhin weisen normierte Betriebssignale den Vorteil auf, dass deren Wertebereich keiner so großen Spreizung unterliegt wie die zugrundeliegenden Absolutwerte. Dadurch treten bei den normierten Betriebssignalen keine so großen Schwankungen auf wie bei den zugehörigen Absolutwerten und die Beobachtung und Beurteilung eines Trends der Betriebssignalwerte ist mittels einer Auswertung der entsprechenden normierten Betriebssignalwerte stark vereinfacht.

Der Betriebssignalmittelwert kann dabei einen arithmetischen oder geometrischen Mittelwert der betrachteten Betriebssignale umfassen; es sind auch weitere Definitionen zur Ermittlung eines Mittelwerts denkbar.

In einer vorteilhaften Ausgestaltung wird der Referenzwertebereich mittels eines kleinsten und eines größten Werts des normierten Betriebsignals gebildet.

Während des Betriebs der technischen Einrichtung unterliegt der Wert eines betrachteten Betriebssignals in der Regel einer gewissen Schwankungsbreite. Nach einem genügend langen Betrachtungszeitraum ist es möglich, einen kleinsten und einen größten Wert des normierten Werts des Betriebsignals anzugeben, welche als Betriebsgrenzen einem Normalbetrieb zugeordnet werden können. Sollten sich in der Folge normierte Betriebssignalwerte ergeben, welche außerhalb dieses Referenzwertebereichs liegen, so ist dies ein starkes Indiz für einen Betriebszustand der technischen Einrichtung - hinsichtlich des betrachteten Betriebssignals - außerhalb des gewünschten Normalbetriebs. Um ein zu scharfes Ansprechen der Überwachung zu verhindern, kann zusätzlich um den Referenzwertebereich ein Toleranzband vorgesehen sein.

Der kleinste und/oder der größte Wert des normierten Betriebssignals kann dabei entweder aus tatsächlichen Messwerten des betreffenden Betriebssignals ermittelt werden oder alternativ mittels einer statistischen Verteilungsfunktion.

Letztere Ausführungsform bietet den Vorteil, dass sich eine längere Testphase zur Ermittlung des kleinsten und des größten Werts erübrigt und stattdessen diese Werte statistisch ermittelt werden, beispielsweise unter Zugrundelegung einer Normalverteilung mit dem jeweiligen Anwendungsfall angepassten Verteilungsparametern.

In einer besonders vorteilhaften Ausgestaltung findet die Ermittlung des Referenzwertebereichs während des Betriebs der technischen Einrichtung mehrfach statt und das normierte Betriebssignal wird mit dem jeweils aktuellen Referenzwertebereich verglichen.

Bei dieser Ausführungsform findet ein Lernvorgang bezüglich des Referenzwertebereichs statt, welcher aufgrund der steigenden Anzahl an zur Verfügung stehender Betriebssignalwerte dem Betrieb der technischen Einrichtung besser angepasst wird.

Zu jedem Zeitpunkt der Überwachung wird dann der jeweils aktuelle Referenzwertebereich verwendet, so dass die Überwachung nicht erst nach Abschluss des Lernvorgangs beginnen kann, sondern praktisch ab Beginn der Inbetriebnahme der technischen Einrichtung mit steigender Qualität.

Die Qualität des aktuellen Referenzwertbereichs erhöht sich dabei insofern, als dass hinsichtlich des kleinsten und des größten Werts des normierten Betriebssignals Veränderungen auftreten können, welche bei nur einmaliger Ermittlung des Referenzwertebereichs nicht erfasst werden können. Beispielsweise kann sich während des Betriebs eines Brenners infolge zufälliger Einflüsse die Temperatur der Flamme leicht nach oben oder unten verändern, ohne dass dadurch der gewünschte Normalbetrieb des Brenners gestört wird. Bei der vorliegenden Ausführungsform wird dies berücksichtigt, indem der kleinste und/oder größte Wert des normierten Betriebssignals entsprechend angepasst werden, um ein zu scharfes und überflüssiges Ansprechen der Überwachung zu verhindern.

Weiterhin ist es vorteilhaft, wenn zusätzlich der aktuelle Wert des Betriebssignals mit einem vorab festgelegten Überwachungsgrenzwert verglichen wird.

Der Überwachungsgrenzwert repräsentiert dabei eine Betriebsgrenze, welche aufgrund der grundsätzlichen Betriebsbedingungen und/oder der Konstruktion der technischen Einrichtung vorab bekannt ist und während des Betriebs der technischen Einrichtung nicht verletzt werden darf. Beispielsweise kann es sich dabei um eine zulässige Maximaltemperatur handeln, welche nicht überschritten werden darf.

Sollte beim grundlegenden erfindungsgemäßen Verfahren aufgrund kurzzeitiger, für den Normalbetrieb vernachlässigbarer Effekte oder zufälliger Störungen, beispielsweise bei der Signalaufnahme, ein Referenzwertebereich ermittelt werden, welcher einen kleinsten und/oder größten Wert umfasst, der den vorab festgelegten Überwachungsgrenzwert verletzt, so kann die zusätzliche Überwachung des Betriebssignals auf diesen vorab festgelegten Überwachungsgrenzwert Sicherheit bieten, dass die oben genannte Betriebsgrenze nicht überschritten wird.

In einer weiteren Ausführungsform wird für jeden Typ von Betriebssignalen ein entsprechender Betriebssignalmittelwert gebildet.

Wie eingangs erwähnt, treten bei einer technischen Einrichtung oftmals Betriebssignale verschiedenen Typs auf, beispielsweise Temperaturen, Ströme, Spannungen, Durchflüsse etc..

Jeder Typ kann dabei wiederum verschiedenen Komponenten der technischen Einrichtung zugeordnet sein, beispielsweise können bei einem Motor Lager- und Gehäusetemperaturen aufgenommen werden, welche zwar beide vom Typ Temperatur sind, aber eine jeweils unterschiedliche Komponente der technischen Einrichtung betreffen.

Bei der vorliegenden Ausführungsform ist nun vorgesehen, dass zumindest für die Betriebssignale gleichen Typs ein jeweils gesonderter Betriebssignalmittelwert gebildet wird, wobei weitere, auf die unterschiedlichen Komponenten der technischen Einrichtung bezogene Unterteilungen vorgesehen sein können.

Besonders vorteilhaft wird die Überwachung jeder Komponente der technischen Einrichtung mittels jeweils eines erfindungsgemäßen Verfahrens durchgeführt, wobei der jeweilige Betriebssignalmittelwert für jede Komponente der technischen Einrichtung und für jeden Typ von Betriebssignalen dieser Komponente gesondert ermittelt wird.

Im Folgenden wird ein Ausführungsbeispiel der Erfindung näher dargestellt.

Es zeigt:
- FIG: eine als Brennkammer einer Gasturbine ausgebildete technische Einrichtung zur Veranschaulichung des erfindungsgemäßen Verfahrens.

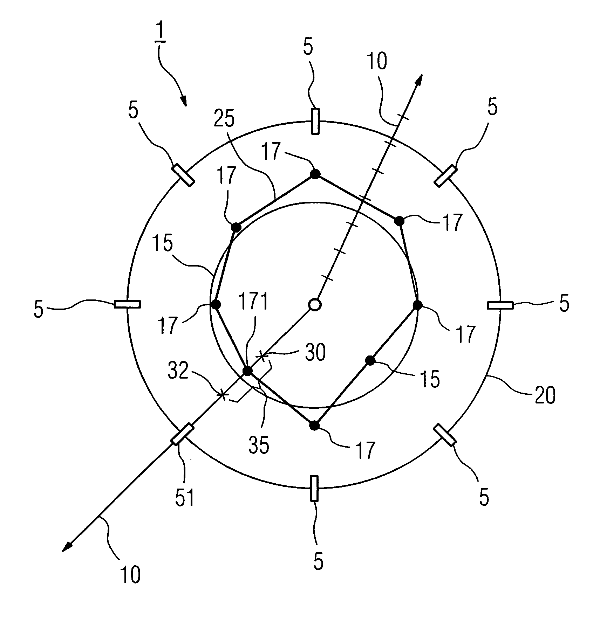

In der Figur ist eine als Brennkammer einer Gasturbine ausgebildete technische Einrichtung 1 im Querschnitt dargestellt.

In der dargestellten Querschnittsebene umfasst die Brennkammer dabei Sensoren 5,51, welche entlang des Umfangs der Brennkammerwand 20 angeordnet sind. Die Sensoren 5,51 sind dabei nicht näher dargestellten Brennern zugeordnet und sollen deren jeweilige Flammentemperatur erfassen.

Aus den Werten von Betriebssignalen, welche mittels der Sensoren 5,51 erfasst werden, wird ein Betriebssignalmittelwert 15 gebildet.

In der Figur ist zur besseren Veranschaulichung und räumlichen Zuordnung zu den Brennern der ermittelte Betriebssignalmittelwert 15 als kreisförmige Äquipotenziallinie dargestellt, welche um einen Mittelpunkt des Brennkammerquerschnitts verläuft.

Für jedes Betriebssignal jedes Brenners 5,51 wird jeweils ein normiertes Betriebssignal 17,171 gebildet, wobei der jeweilige tatsächliche Temperaturmesswert des betreffenden Betriebssignals verringert wird um den Betriebssignalmittelwert 15, so dass die normierten Betriebssignale 17,171 jeweils eine Abweichung vom Betriebssignalmittelwert 15 repräsentieren.

Anstelle der genannten Subtraktion des Betriebssignalmittelwerts 15 von den tatsächlichen Messwerten für die entsprechenden Betriebssignale können die tatsächlichen Messwerte auch ins Verhältnis gesetzt werden zum Betriebssignalmittelwert 15, so dass sich ein Quotient ergibt, der die Abweichung des tatsächlichen Messwerts vom Betriebssignalmittelwert 15 repräsentiert.

In der Figur ist weiterhin eine Werteachse 10 dargestellt, welche die Richtung zunehmender Temperaturwerte anzeigt, um ein Temperaturprofil 25 der Brennkammer mit Hilfe der normierten Betriebssignale 17,171 darstellen zu können.

Während des Betriebs der Brennkammer ergeben sich für jeden Sensor 5,51 jeweilige kleinste 30 und größte Werte 32 für das betreffende normierte Betriebssignal 17,171. Dieser kleinste 30 und größte Wert 32 definieren einen Referenzwertebereich 35.

Das Temperaturprofil 25 ist eine momentan oder eher kurzzeitig betrachtete Temperaturverteilung im Brennkammerquerschnitt und infolgedessen während des Betriebs der Brennkammer einer Veränderung unterworfen, beispielsweise infolge sich verändernder Brennstoff- und/oder Luftzufuhr, Lastschwankungen, Brennerstörungen etc..

Im Unterschied dazu sind der kleinste Wert 30 und der größte Wert 32 keine Momentan- oder Kurzeitaufnahmen, sondern in einem Betriebszeitraum festgestellte kleinste bzw. größte Betriebssignalwerte, die mit großer Wahrscheinlichkeit einen normalen Betriebsbereich der Brennkammer repräsentieren.

Der kleinste Wert 30 und der größte Wert 32 wird bevorzugt für jedes Betriebssignal separat ermittelt, da üblicherweise jede Komponente, welche das entsprechende Betriebssignal erzeugt, nicht vollkommen identisch mit den anderen entsprechenden Komponenten ist und daher ein jeweils unterschiedlicher, wenn auch vielleicht nur geringfügig unterschiedlicher Referenzwertebereich 35 für jedes Betriebssignal zu bilden ist.

In der Figur ist zur besseren Veranschaulichung nur einer dieser Referenzwertebereiche 35 dargestellt.

## Patentansprüche

1. Verfahren zur Überwachung einer technischen Einrichtung (1),
**gekennzeichnet durch** folgende Schritte:
a) während des Betriebs der technischen Einrichtung (1) wird eine Anzahl an Betriebssignalen der technischen Einrichtung (1) erfasst,
b) mittels mindestens eines Teils der Betriebssignale aus der Anzahl der Betriebssignale wird ein Betriebssignalmittelwert (15) gebildet,
c) für mindestens ein Betriebssignal wird ein normiertes Betriebssignal (17,171) gebildet, welches eine Abweichung eines aktuellen Werts des Betriebssignals vom Betriebssignalmittelwert (15) umfasst, und
d) das normierte Betriebssignal (17,171) wird mit einem Referenzwertebereich (35) des betreffenden Betriebssignals verglichen.

2. Verfahren nach Anspruch 1,
**dadurch gekennzeichnet, dass**
der Referenzwertebereich (25) mittels eines kleinsten (39) und eines größten Werts (32) des normierten Betriebssignals (17,171) gebildet wird.

3. Verfahren nach Anspruch 2,
**dadurch gekennzeichnet, dass**
der kleinste (30) und/oder größte Wert (32) des normierten Betriebssignals (17,171) aus tatsächlichen Messwerten des betreffenden Betriebssignals ermittelt werden.

4. Verfahren nach Anspruch 2,
**dadurch gekennzeichnet, dass**
der kleinste (30) und/oder größte Wert (32) des normierten Betriebssignals (17,171) mittels einer statistischen Verteilungsfunktion ermittelt werden.

5. Verfahren nach einem der Ansprüche 2 bis 4,
**dadurch gekennzeichnet, dass**
die Ermittlung des Referenzwertebereichs (35) während des Betriebs der technischen Einrichtung (1) mehrfach stattfindet und das normierte Betriebssignal (17,171) mit dem jeweils aktuellen Referenzwertebereich (35) verglichen wird.

6. Verfahren nach einem der Ansprüche 1 bis 5,
**dadurch gekennzeichnet, dass**
zusätzlich der aktuelle Wert des Betriebssignal mit einem vorab festgelegten Überwachungsgrenzwert verglichen wird.

7. Verfahren nach einem der Ansprüche 1 bis 6,
**dadurch gekennzeichnet, dass**
für jeden Typ von Betriebssignalen ein entsprechender Betriebssignalmittelwert (15) gebildet wird.
